# EUROPEAN PATENT APPLICATION

(11) **EP 4 557 625 A1**
(43) Date of publication of application: **21.05.2025**
(21) Application number: 24212712.4
(22) Date of filing: 13.11.2024
(51) Int. Cl.: H04B 7/0413, H04W 88/06

(54) **AGILE RECONFIGURABLE WIFI SYSTEM UNDER COEXISTENCE**

(30) Priority: 14.11.2023 US 202363598561 P; 06.11.2024 US 202418938419
(71) Applicant: MediaTek Inc., Hsinchu City, 30078 (TW)
(72) Inventor: SHANAA, Osama Khalil, San Jose (US); HU, Chen-Hua, Hsinchu City (TW)
(74) Representative: Hoefer & Partner Patentanwälte mbB

(57) **Abstract**

In an aspect of the disclosure, a method, a computer-readable medium, and an apparatus are provided. The apparatus may be a UE. The UE identifies a coexistence of multiple communication instances that interfere with each other (1002). The UE determines, based on a current scenario and a capability of the UE, a coexistence scheme (1004). The UE adjusts an execution of the multiple communication instances based on the coexistence scheme (1006).

## Description

### CROSS-REFERENCE TO RELATED APPLICATION(S)

This application claims the benefits of U.S. Provisional Application Serial No. 63/598,561, entitled "Agile reconfigurable WiFi system under coex" and filed on November 14, 2023, which is expressly incorporated by reference herein in its entirety.

### BACKGROUND

### Field

The present disclosure relates generally to wireless communications, and more particularly, to techniques of managing coexistence between Wi-Fi and cellular (LTE/NR) technologies within a single device.

### Background

The statements in this section merely provide background information related to the present disclosure and may not constitute prior art.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the 4G Long Term Evolution (LTE) standard.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. A method, a computer-readable medium, and an apparatus according to the invention are defined in the independent claims. The dependent claims define preferred embodiments thereof.

In an aspect of the disclosure, a method, a computer-readable medium, and an apparatus are provided. The apparatus may be a UE. The UE identifies a coexistence of multiple communication instances that interfere with each other. The UE determines, based on a current scenario and a capability of the UE, a coexistence scheme. The UE adjusts an execution of the multiple communication instances based on the coexistence scheme.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example wireless communication system including multiple radio sources and a UE.
FIG. 2 is a diagram illustrating an example of a wireless communication device with multiple receivers and transmitters.
FIG. 3 is a diagram illustrating an example coexistence challenge when Wi-Fi and LTE operate simultaneously on a phone.
FIG. 4(A) is a diagram illustrating a specific spectrum related to the scenario in FIG. 3.
FIG. 4(B) is a diagram illustrating a frequency spectrum related to the scenario shown in FIG. 3 with LTE being the aggressor and Wi-Fi being the victim.
FIG. 5 illustrates an example system architecture that addresses the coexistence challenge.
FIG. 6 illustrates an example system architecture incorporating an iPA.
FIG. 7 illustrates an example system architecture that integrates both an iPA and an ePA.
FIG. 8 illustrates an example table outlining various communication configurations regarding Wi-Fi COEX with LTE/NR.
FIG. 9 is a diagram illustrating an example interaction for changing the operating mode between a client device and a Wi-Fi router.
FIG. 10 is a flow chart illustrating an example process for addressing the coexistence challenge.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

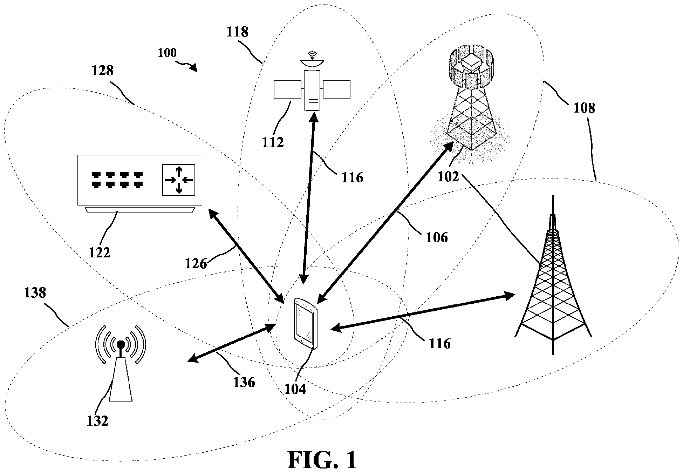

FIG. 1 is a diagram 100 illustrating an example of a wireless communications system 100. The wireless communications system may include multiple radio sources such as multiple base stations 102, a communication satellite 112, a wireless router 122 and a Wi-Fi access point (AP) 132, and a user equipment (UE) 104.

Taking the base station as an example, the base stations 102 may communicate directly or indirectly with each other. The base stations 102 may wirelessly communicate with the UE 104. Each of the base stations 102 may provide communication coverage for a respective geographic coverage area 108. Similarly, the communication satellite 112, the wireless router 122 and the AP 132 may provide communication coverage for respective geographic coverage areas 118, 128 and 138. These geographic coverage areas 108, 118, 128, and 138 may overlap with each other. The communication links 106 between the base stations 102 and the UE 104 may include uplink (UL) (also referred to as reverse link) transmissions from the UE 104 to a base station 102 and/or downlink (DL) (also referred to as forward link) transmissions from a base station 102 to the UE 104. Similarly, the communication link 116 between the communication satellite 112 and the UE 104, the communication link 126 between the wireless router 122 and the UE 104, and the communication link 136 between the AP 132 and the UE 104, may also include UL transmissions and DL transmissions.

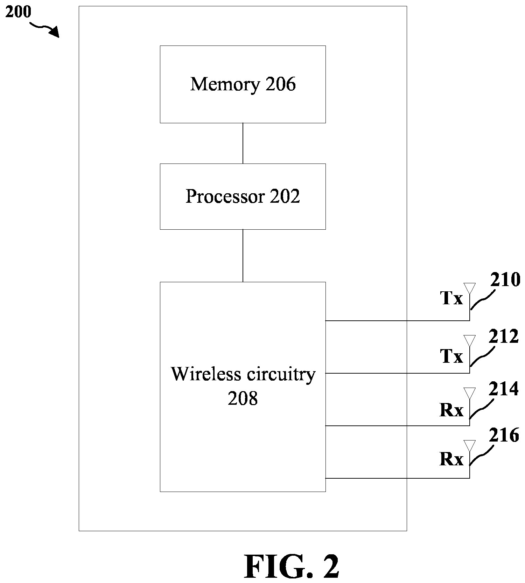

FIG. 2 is a diagram 200 illustrating an example of a wireless communication device with multiple receivers and transmitters, such as the UE 104 as shown in FIG. 1. As shown in FIG. 2, the UE 104 may include a processor 202, a memory 206, a wireless circuitry 208, two transmitters (Tx) 210 and 212, and two receivers (Rx) 214 and 216. The processor 202 and the wireless circuitry 208 may cooperate together in establishing connections, interacting with application programs, formatting data in accordance with one or more wireless communication protocols, translating digital data into radio frequency signals suitable for transmission, and similarly converting received radio frequency signals into digital data. The wireless circuitry 208 may be connected to one or more radio frequency transmit signal chains (including internal and/or external circuitry, e.g., antennas) 210 and 212, and one or more radio frequency receive signal chains (including internal and/or external circuitry, e.g., antennas) 214 and 216.

The UE 104 may configure the processor 202 and the wireless circuitry 208 to receive radio frequency signals from one or more radio sources, such as base stations 102, the communication satellite 112, the wireless router 122 and the AP 132, individually in series and/or collectively in parallel. Preferably, the processor 202 may configure the wireless circuitry 208 to receive radio frequency signals on a first set of frequencies from a set of serving cells and may re-configure the wireless circuitry 208 to receive radio frequency signals on a second set of frequencies from a set of neighbor cells.

The communication links, such as the communication links 106, may use multiple-input and multiple-output (MIMO) antenna technology. The communication links may be through one or more carriers.

For example, the Wi-Fi AP 132 may be in communication with the UE 104 which is configured as a Wi-Fi station (STA) via the communication link 136 in a 5 GHz unlicensed frequency spectrum. When communicating in an unlicensed frequency spectrum, the AP 132 and the UE 104 may perform a clear channel assessment (CCA) prior to communicating in order to determine whether the channel is available.

The base stations 102 may be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. Examples of the UE 104 may include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. The UE 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The present disclosure may be applicable to various wireless/radio access technologies, such as 5G New Radio (NR), LTE, LTE-Advanced (LTE-A), Code Division Multiple Access (CDMA), Global System for Mobile communications (GSM), or other wireless/radio access technologies.

Modern smartphones incorporate various radio technologies, including cellular radios for 5G connectivity, Wi-Fi, Bluetooth, Global Positioning System (GPS), and Near Field Communication (NFC). These radios may need to operate simultaneously to provide uninterrupted service and full functionality. The challenge lies in managing the coexistence (COEX) of these different radio technologies within a single device.

Referring back to FIG. 1, the signal strength of radios between different radio sources and the UE may be not equal; some can be very strong while others can be very weak, depending on the distance between the UE and the radio sources. For example, when the UE 104 is far from the base stations 102, its transmitter will emit its maximum radio frequency (RF) power, while its receiver will be in its most sensitive state to maintain the link.

It should be noted that, because these different radios need to operate concurrently, they can severely interfere with each other, resulting in degradation of communication quality, reduced data throughput, or even link failure. For example, LTE/5G and Wi-Fi bands are quite close to each other in frequency. Each of these radios can either act as an aggressor via its transmitter or as a victim via its receiver. Specifically, the UE transmitter is at its most aggressive state when the UE 104 is farthest from the communicating radio source (e.g., the base stations 102 or the AP 132). Similarly, a receiver is most susceptible to interference when the UE 104 is farthest from the communicating radio source. The most challenging coexistence condition arises when the UE 104 is farthest from all communicating radio sources and operating on communication links, such as LTE/5G and Wi-Fi, that are the closest in frequency to each other.

In a typical smartphone, the cellular radio, such as Long Term Evolution (LTE) or 5G New Radio (NR), has the highest priority as it is the primary means of communication. When a user is making a call, downloading, or streaming data over the cellular network, other radio technologies, particularly Wi-Fi, must continue to function without significantly degrading their performance or completely ceasing operation.

This disclosure addresses the challenge of intelligent Wi-Fi operation in an environment that includes LTE/NR, without compromising Wi-Fi performance. The goal is to minimize interference between Wi-Fi and cellular radios, allowing them to coexist harmoniously within the same device.

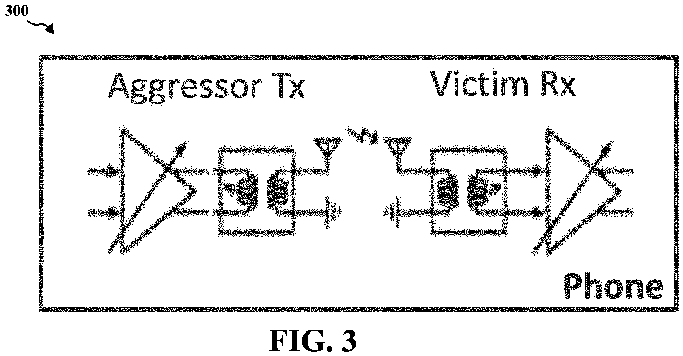

FIG. 3 is a diagram 300 illustrating a coexistence challenge in a wireless communication system where Wi-Fi and LTE operate simultaneously on a single device, such as the UE 104. The diagram depicts an "Aggressor Tx" representing the Wi-Fi transmitter and a "Victim Rx" representing the LTE receiver. This configuration highlights the potential interference that can occur between these two communication technologies within the same device.

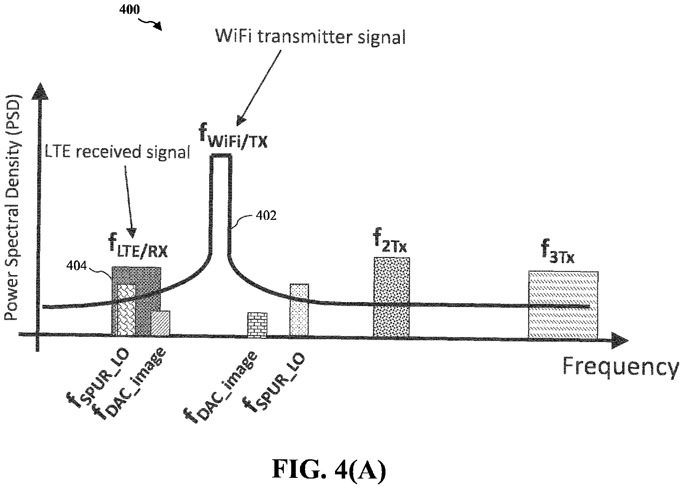

FIG. 4(A) is a diagram 400 illustrating the frequency spectrum related to the scenario in FIG. 3. The x-axis represents frequency, while the y-axis represents Power Spectral Density (PSD). This diagram provides a visual representation of how different radio technologies, such as Wi-Fi and LTE, occupy different frequency bands within the spectrum and how different impairments can result in these radios interfering with one another.

In modern wireless communication systems, multiple radio technologies often coexist within a single device, such as the UE 104. These technologies, which can be referred to as "communication instances," operate on different frequency bands. For example, cellular networks like LTE or 5G NR can operate on various frequency bands depending on the service provider and available spectrum. Some cellular networks operate in the 2 GHz band close to the 2.4GHz Wi-Fi band (for example LTE band n41), others in the 3 GHz band, and more recently, some are utilizing the 5 GHz band or operate very close to it (for example LTE band n79).

Wi-Fi, on the other hand, primarily operates in two bands: the 2.4 GHz and 5 GHz bands (and recently the 6GHz band). As shown in FIG. 4(A), the Wi-Fi transmitter signal, represented by a curve 402 labeled as *F*_{*WiFi*/}*_{TX},* operates at a frequency around 5.1 GHz. The LTE received signal, represented by a box 404 labeled as *F*_{*LTE*/}*_{RX},* operates at a lower frequency, around 4.9 GHz. This scenario illustrates a frequency separation of approximately 200 MHz between the two signals.

The proximity of these frequency bands creates a coexistence challenge. When the Wi-Fi transmitter in the UE 104 is active, it does not only transmit data within its allocated band. Due to the nature of radio frequency (RF) transmission, energy spills outside the designated band. This phenomenon is known as out-of-band emission or spectral regrowth.

The out-of-band emissions from the Wi-Fi transmitter, while relatively low in power compared to the in-band signal, can still be significant enough to cause interference with the nearby LTE receiver. As shown in FIG. 4(A), the Wi-Fi transmitter's spectral mask extends beyond its allocated band, potentially overlapping with the LTE receive band.

This interference can lead to several problems for the LTE receiver in the UE 104. The spilled energy from the Wi-Fi transmitter can increase the noise floor in the LTE receive band, effectively reducing the signal-to-noise ratio (SNR) of the desired LTE signal. This degradation in SNR can result in decreased sensitivity of the LTE receiver, a phenomenon known as desensitization or "desense."

The desensitization of the LTE receiver can have several consequences:
1. Increased minimum receivable signal strength: The UE 104 may require a stronger LTE signal from a base station 102 to maintain a reliable connection.
2. Reduced coverage area: The UE 104 may need to be closer to the base station 102 to receive an adequately strong signal.
3. Increased likelihood of dropped calls or lost connections: The probability of the UE 104 losing its connection to the base station 102 increases when the Wi-Fi transmitter is active.
4. Decreased data throughput: The degraded SNR can result in lower data rates for the LTE connection.

The Wi-Fi TX out-of-band noise impairment includes several components:
1. TX skirt: This refers to the spectral regrowth or spreading of the transmit signal beyond its intended bandwidth. It is a result of non-linearities in the transmitter's power amplifier and other RF components.
2. DAC image: Digital-to-Analog Converter (DAC) images are unwanted signals that appear at frequencies that are multiples of the sampling frequency away from the desired signal. In this illustration, the DAC image is typically below -145 dBm/Hz.
3. Offset LO Spur: Local Oscillator (LO) spurs are unwanted signals generated by the frequency synthesis circuitry. The offset LO spur in this illustration is shown to be below -130 dBm/Hz.
4. TX Harmonic: Harmonics are integer multiples of the fundamental frequency and can cause interference in other bands.

These impairments can affect various frequency bands, including the Low (L), Medium (M), High (H), Ultra-High (UH), and Cognitive Radio (CR) bands. All of these bands are subject to restrictions imposed by regulatory bodies such as the Federal Communications Commission (FCC) as well as the requirements for coexistence with other radios in the same device.

The coexistence challenge illustrated in FIG. 3 is not limited to Wi-Fi as the aggressor and LTE as the victim. The roles can be reversed, with LTE acting as the aggressor and Wi-Fi as the victim. This bidirectional interference potential underscores the complexity of managing multiple radio technologies within a single device like the UE 104.

In the coexistence scenario where LTE acts as the aggressor (transmitter) and Wi-Fi as the victim (receiver), the LTE transmitter in the UE 104 operates at a significantly higher power level compared to the Wi-Fi transmitter. Cellular networks typically require transmission powers up to four or six times greater than Wi-Fi in terms of linear power output. This substantial power difference exacerbates the potential for interference, making the LTE transmitter a more powerful aggressor.

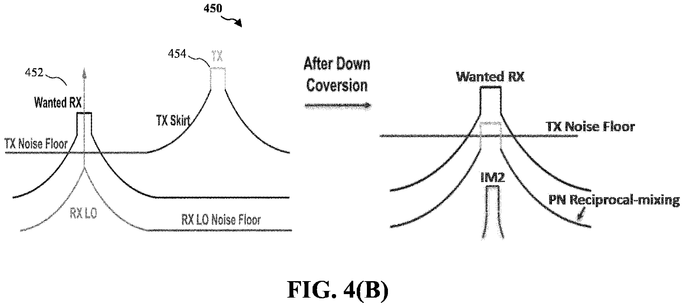

FIG. 4(B) is a diagram 450 illustrating the frequency spectrum related to the scenario shown in FIG. 3 with LTE being the aggressor and Wi-Fi being the victim. The diagram depicts the relative positions and power levels of the LTE transmit signal and the Wi-Fi receive signal. The x-axis represents frequency, while the y-axis represents Power Spectral Density (PSD).

The diagram shows a wanted Wi-Fi receive signal 452, labeled as "Wanted RX," which typically operates in the microwatt range. In contrast, the LTE transmit signal 454, labeled as "TX," operates close to the watt range. This stark difference in power levels, often spanning three orders of magnitude, presents a significant challenge for the Wi-Fi receiver in the UE 104.

The LTE transmit signal can cause interference to the Wi-Fi receiver through two primary mechanisms:
1. Transmit Skirt: The energy from the LTE transmitter spills out of its allocated band into the adjacent Wi-Fi band. This out-of-band emission, represented by the "TX Skirt" in FIG. 4(B), can corrupt the Wi-Fi receive signal.
2. Direct Interference: Due to the limited isolation between the LTE and Wi-Fi antennas within the UE 104, the high-power LTE transmit signal can directly couple into the Wi-Fi receiver path. In some device designs, the LTE and Wi-Fi radios may even share the same antenna, further exacerbating this problem.

The diagram also illustrates other important signals and noise sources:
- TX Noise Floor: This represents the baseline noise level of the LTE transmitter, which can extend into the Wi-Fi receive band.
- RX LO: The receive Local Oscillator signal used for down conversion in the Wi-Fi receiver.
- RX LO Noise Floor: The noise contributed by the Local Oscillator in the Wi-Fi receiver.

Various impairments that can affect the performance of the Wi-Fi receiver in the coexistence scenario are categorized into general impairments and other impairments.

General Impairments include:
1. Tx skirt: As previously described, this refers to the out-of-band emissions from the LTE transmitter.
2. LO Phase noise (PN) Reciprocal-mixing: This occurs when the phase noise of the Local Oscillator in the Wi-Fi receiver mixes with strong interfering signals, spreading the interference across a wider bandwidth.
3. IM2 (2nd Inter-modulation): Second-order intermodulation products generated in the Wi-Fi receiver due to non-linearities when processing the strong LTE signal with a signal envelope.
4. Gain Compression: The strong LTE signal can drive the Wi-Fi receiver's amplifiers into compression, reducing their gain for the desired Wi-Fi signal.
5. NF expansion: Similar to gain compression, the strong LTE signal can degrade the noise figure of the Wi-Fi receiver, increasing its effective noise floor.

Other Impairments include:
1. Tx Harmonic: Harmonic frequencies generated by the LTE transmitter that fall within the Wi-Fi receive band.
2. Tx Spur: Spurious emissions from the LTE transmitter that can interfere with Wi-Fi reception.
3. DAC Image: Unwanted images produced by the Digital-to-Analog Converter in the LTE transmitter.
4. Rx LO Harmonic: Harmonic frequencies generated by the Wi-Fi receiver's Local Oscillator.
5. Aliasing: Unwanted folding of out-of-band signals into the desired signal band due to sampling in the Wi-Fi receiver.
6. Rx LO Spur: Spurious emissions from the Wi-Fi receiver's Local Oscillator.
7. IM3 (3rd Inter-modulation): Third-order intermodulation products generated in the Wi-Fi receiver.

To address these coexistence challenges, various techniques have been employed by device manufacturers. One straightforward approach is Time Division Duplex (TDD), where the UE 104 alternates between Wi-Fi and LTE operation. In this scheme, when LTE needs to transmit, Wi-Fi operation is temporarily suspended. The UE 104 then switches back and forth between the two technologies based on the current requirements, adhering to relevant standards to maintain connections with both radio sources such as the Wi-Fi router 122 and an LTE base station 102.

While TDD effectively eliminates simultaneous operation conflicts, it comes at the cost of reduced overall data throughput, as the available time is shared between the two radio technologies. This approach is generally acceptable for mid-tier and low-tier devices, particularly when the probability of worst-case interference scenarios is low. These scenarios typically occur when Wi-Fi operates at the lower edge of its band (around 5.1 GHz) and LTE operates at the upper edge of its band (around 4.9 GHz), with both radios operating at maximum power due to being far from their respective access points.

However, premium device manufacturers, such as those producing high-end smartphones, often reject the TDD approach in favor of solutions that allow simultaneous operation of Wi-Fi and LTE at full capacity. These manufacturers aim to provide a seamless user experience without compromising the performance of either radio technology, even in challenging coexistence scenarios.

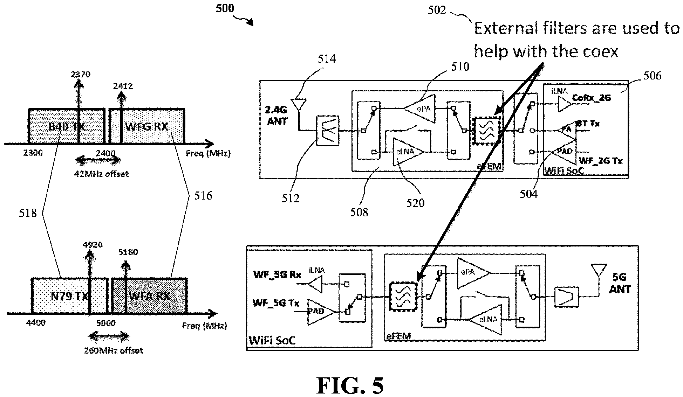

FIG. 5 is a diagram 500 illustrating a first architecture designed to address the coexistence challenges between Wi-Fi and LTE/NR technologies within a single device, such as the UE 104. This architecture incorporates sophisticated filtering and amplification techniques to mitigate interference and optimize performance for both Wi-Fi and cellular communications. It is noted that the antennas in FIG. 5 can be either shared with LTE or kept separate.

In the 2.4 GHz section, the signal path begins at a System on Chip (SoC) 506, which houses the initial transmitter 504. The transmitter 504 generates the Wi-Fi signal, but as discussed earlier, this signal may contain unwanted out-of-band emissions that could interfere with LTE/NR operations. To address this, the signal first passes through an external bandpass filter 502 integrated onto the Printed Circuit Board (PCB).

The bandpass filter 502 functions to reject the transmitter's sideband emissions, often referred to as the "skirt." This filtering action significantly reduces the potential for interference with nearby LTE/NR bands. The filtered signal then proceeds to a front-end module (FEM) 508, which is strategically positioned close to the antenna 514 to minimize signal loss.

Within the FEM 508, the signal undergoes further processing. First, it is amplified by an external Power Amplifier (PA) 510. This PA 510 is designed to provide high linearity and low noise performance, which is essential for maintaining signal integrity and minimizing distortion. The use of an external PA allows for higher power output and better thermal management compared to integrated PAs.

After amplification, the signal passes through a diplexer 512. The diplexer 512 provides additional filtering, further refining the signal before it reaches the antenna 514. This multi-stage filtering approach, combining the initial bandpass filter 502 and the diplexer 512, creates a highly effective barrier against out-of-band emissions, significantly reducing the potential for interference with LTE/NR operations.

The 5 GHz section of the diagram follows a similar signal path, but with components optimized for the higher frequency range.

Further, LTE/NR bands and Wi-Fi bands are in proximity of each other. For instance, the N79 LTE/NR band operates close to the 5 GHz Wi-Fi band, with only a 260 MHz offset between them. Similarly, in the 2.4 GHz range, Band 40 of LTE/NR operates at approximately 2.395 GHz, creating a narrow 42 MHz offset from the 2.4 GHz Wi-Fi band.

As a non-limiting example, this architecture as shown in FIG. 5 supports a two-by-two (2x2) Multiple-Input Multiple-Output (MIMO) configuration for Wi-Fi operations. The UE 104 incorporates two complete radio chains (transmit and receive) for each Wi-Fi band (2.4 GHz and 5 GHz), totaling four streams. Each stream benefits from the advanced filtering and amplification techniques described above, enabling robust Wi-Fi performance even in the presence of strong LTE/NR signals. Notably, this architecture can be scaled or extended to support an n-by-n (nXn, where n is a natural number greater than 2) MIMO configuration as well. For example, the UE 104 may incorporate three or more transmitters and receivers.

In the receive path, when the UE 104 is in Wi-Fi receive mode, LTE/NR transmissions can act as powerful interferers. To mitigate this, the receive path incorporates an external Low Noise Amplifier (LNA) 520 within the FEM 508. The LNA 520 amplifies the received Wi-Fi signal while adding minimal noise, improving the signal-to-noise ratio before further processing.

After the LNA 520, the received signal passes through another instance of the filter 502. This post-LNA filtering is for attenuating any LTE/NR blockers that may have been amplified along with the desired Wi-Fi signal. By suppressing these interferers before the signal reaches the SoC 506, the architecture significantly eases the processing requirements of the Wi-Fi receiver, allowing it to focus on the desired signal rather than combating strong out-of-band interference.

In this first architecture, by employing external filters, PAs, and LNAs, the system can achieve higher performance levels than would be possible with fully integrated solutions.

However, this performance comes at the cost of increased component count, higher bill of materials (BOM) cost, and greater PCB area requirements. The use of high-quality Surface Acoustic Wave (SAW) or Bulk Acoustic Wave (BAW) filters, particularly in the 2.4 GHz path, contributes significantly to the overall cost but is often deemed necessary for premium devices where performance is paramount.

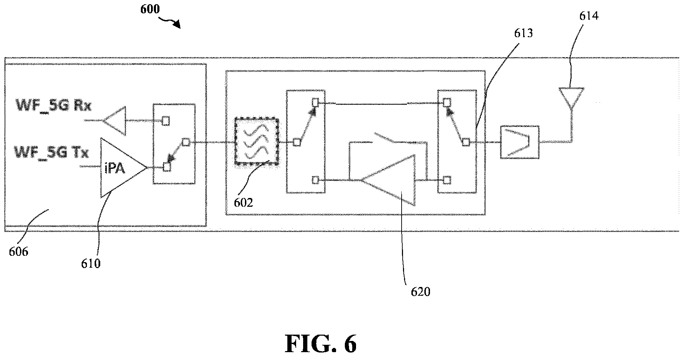

FIG. 6 is a diagram 600 illustrates a second architecture incorporating an integrated power amplifier (iPA) 610. This architecture addresses the cost concerns associated with external power amplifiers (ePAs) used in the first architecture, such as the one depicted in FIG. 5. However, the introduction of the iPA 610 presents new challenges in managing signal quality and power efficiency.

The second architecture includes an SoC 606 that houses the iPA 610. The SoC 606 integrates both the Wi-Fi receiver (WF_5G Rx) and transmitter (WF_5G Tx) circuits. The transmit path begins with the WF_5G Tx signal, which is amplified by the iPA 610 before leaving the SoC 606.

After exiting the SoC 606, the amplified signal encounters a filter 602. This filter 602 serves a similar purpose to the filter 502 in FIG. 5, aiming to suppress out-of-band emissions and reduce potential interference with nearby LTE/NR bands. However, the placement of this filter 602 after the iPA 610 introduces a significant challenge.

The filter 602, while effective in attenuating unwanted emissions, also introduces an insertion loss to the desired signal. This insertion loss may amount to approximately 2 dB, which translates to a power reduction of about 60%. To put this in perspective, if the input signal power is normalized to 1 unit, only about 0.6 units of power emerge from the filter 602, with the remaining 0.4 units lost within the filter.

This power loss is particularly problematic in the context of linear RF power systems, where maintaining signal integrity and power efficiency is important. Unlike the first architecture shown in FIG. 5, where the filter 502 is positioned before the ePA 510, allowing the ePA 510 to compensate for the insertion loss, the second architecture in FIG. 6 places the filter 602 after the iPA 610. Consequently, there is no subsequent amplification stage to recover the lost power.

The implications of this power loss are significant. The reduced signal strength may lead to decreased transmission range, lower data rates, and potentially increased power consumption as the device attempts to maintain a reliable connection. Furthermore, the weakened signal may be more susceptible to interference and noise, potentially degrading the overall performance of the Wi-Fi system within the UE 104.

To mitigate these issues, the filter 602 may be bypassed. However, this approach would reintroduce the coexistence challenges that the filter was intended to address, potentially causing interference with LTE/NR operations. This creates a dilemma: either accept the power loss and its associated performance implications or risk interference between Wi-Fi and LTE/NR systems.

Further, a switch 613 is incorporated to enable dynamic routing of signals, potentially allowing for selective use of the filter 602 based on operating conditions. A diplexer 612 provides additional filtering. The antenna 614 serves as the final component in the signal chain, radiating the Wi-Fi signal into the environment.

In the receive path, the system employs an LNA 620 to boost incoming signals while minimizing added noise. This LNA 620 maintains receiver sensitivity, especially in the presence of strong LTE/NR signals that may act as interferers.

The challenges presented by the coexistence of Wi-Fi and LTE/NR technologies within a single device, such as the UE 104, necessitate innovative solutions, particularly in architectures employing integrated power amplifiers (iPAs).

This disclosure presents some solutions to address the coexistence challenge in various scenarios, including:
(1) Turn on Wi-Fi transmission streams on antennas that are not shared with LTE/NR (this provides an extra 10-15 dB isolation).
(2) When coexisting with LTE/NR, use external PA streams only.
(3) In Multiple Input Multiple Output (MIMO) cases, use only MIMO for Rx and Single Input Single Output (SISO) for Tx, where making system transitions seamless (no reassociation with Access Point (AP)).
(4) Dynamically adjust the coexistence threshold between the different coexistence schemes listed above, depending on some particular parameters, including: LTE blocker level, Wi-Fi received signal level (RSSI - Received Signal Strength Indication), and target signal SNR (Signal-to-Noise Ratio).

One of the primary advantages of the UE 104 in managing coexistence scenarios is its ability to anticipate when different radio technologies will be activated. The UE 104 can determine when LTE/NR will be turned on, for instance, when a base station 102 is communicating with it, or when Wi-Fi is activated. This foreknowledge allows the UE 104 to distinguish between situations that require coexistence management and those that do not.

In scenarios where coexistence is not a concern, such as when LTE is not present, the need for additional filtering is eliminated. Referring to FIG. 6, in non-coexistence situations, the filter 602 can be bypassed or removed entirely. The filtering provided by the diplexer 612 alone is sufficient before the signal is transmitted through the antenna 614. This approach minimizes insertion loss and preserves signal strength when additional filtering is unnecessary.

However, when a coexistence scenario arises, the Wi-Fi SoC 606 is alerted to the situation. The UE 104 typically employs a two-by-two configuration (ultimately can be nXn), allowing it to operate in either Single Input Single Output (SISO) mode, which utilizes one stream, or Multiple Input Multiple Output (MIMO) mode, which employs two radios for increased throughput and data reception.

To facilitate Wi-Fi and LTE coexistence, the UE 104 can segregate these two frequency bands to prevent interference. This segregation can be achieved through several methods, including the application of filters or the use of separate antennas. During transmission, the signal travels through an isolation path of an antenna to minimize leakage into other antennas.

In a first solution, a SISO configuration has two radios available, each connected to an antenna. Some of these antennas are shared with LTE, while others are not. To provide additional isolation between the Wi-Fi signal and LTE, a strategy can be employed where the transmission stream is connected to an antenna that is not shared with LTE, typically the antenna farthest from the LTE radio. This approach can offer isolation of about 10 to 15 dB, and in some cases, even up to 20 dB. This level of isolation is equivalent to a significant reduction in interference, potentially as much as a 10-fold decrease at its best.

In general, the UE 104 has multiple antennas. The SoC (such as SoC 506 or 606) is positioned adjacent to one antenna and far from the other. Consequently, these antennas are referred to as the near antenna and the far antenna, respectively. In a second solution, the internal PA 610 within the SoC 606 may be adjacent to the near antenna, while an external PA can be introduced for the far antenna streams.

In a coexistence scenario, upon LTE activation, the streams including an external PA, such as the PA 510 shown in FIG. 5, may be utilized to mitigate the adverse effects of the filter 502 implemented for coexistence management. As previously discussed, when the external PA 510 is positioned downstream of the filter 502 in the signal transmission stream, it can amplify the signal to compensate for the filter's insertion loss before transmitting the signal to the antenna 514. Therefore, in a coexistence situation, the stream equipped with an external PA is preferred, particularly for single-stream operation.

In a third solution, a filter, such as the filter 602 shown in FIG. 6, is placed in series with the iPA 610 in the stream utilizing the iPA can result in performance degradation. In such cases, for transmission purposes only, a switch to single-stream transmission is implemented, while maintaining two-stream reception. This approach allows the system to benefit from MIMO reception while avoiding the performance penalties associated with filtered iPA transmission in coexistence scenarios.

In one scenario, two-by-two mode is in use without LTE interference. When LTE activity suddenly commences, an immediate transition to single-stream transmission is initiated, while reception remains at two streams. This dynamic adaptation allows the system to maintain optimal performance in changing radio environments.

Further, if a task using Wi-Fi is in progress and LTE unexpectedly interrupts, users may notice their Wi-Fi initiating reassociation with the router. This disruption can be frustrating and impair the user experience. Ideally, this transition would occur seamlessly. Fortunately, most modern routers are capable of facilitating this seamless transition without the need for reassociation, thereby providing a more enjoyable and uninterrupted user experience.

The UE 104 may have the capability to execute one or a combination of these solutions. For example, it can utilize a stream that employs an antenna specifically designed to isolate from LTE interference, or alternatively, leverage a stream equipped with an external PA. In MIMO scenarios, the system can dynamically switch to SISO configuration for transmission while maintaining MIMO for reception, enabling single-stream transmission while preserving two-stream reception capabilities. The SISO transmission, for example, may use an antenna that is not shared with LTE and/or use an external power amplifier (ePA) in its stream.

This system is agile, capable of adapting to various coexistence scenarios. In a fourth approach, Wi-Fi and LTE coexist, and the UE 104 may be operating at the band's edge, with LTE transmitting at maximum power, or with reduced sensitivity due to distance from the Wi-Fi router, the system can adjust based on thresholds programmed into the firmware. These thresholds can trigger operations as necessary, optimizing performance in challenging radio environments.

The coexistence management system can dynamically adjust its behavior based on several factors, including the LTE blocker level, Wi-Fi received signal level (RSSI), and target signal SNR. This adaptive approach allows the system to strike an optimal balance between interference mitigation and performance optimization.

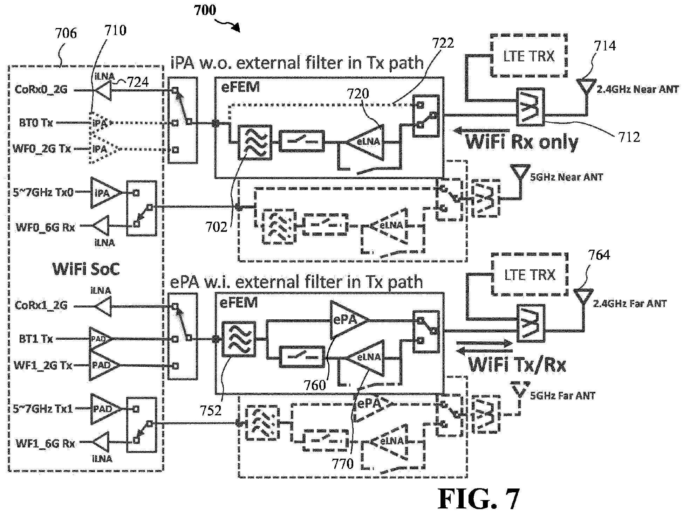

FIG. 7 is a diagram 700 illustrating a third architecture that integrates both an integrated power amplifier (iPA) and an external power amplifier (ePA) to address coexistence challenges between Wi-Fi and LTE/NR technologies within a single device, such as the UE 104. The third architecture has two antennas: a near antenna 714 and a far antenna 764. These antennas are typically positioned at opposite ends of the UE 104, with the System-on-Chip (SoC) 706 located adjacent to the near antenna 714.

For the streams associated with the near antenna 714, an iPA 710 and a low-noise amplifier (LNA) 724 (i.e., iLNA) are integrated within the SoC 706. This integration offers cost and space advantages for the shorter signal path. Conversely, due to the longer PCB trace to the far antenna 764, an ePA 760 and an LNA 770 outside the SoC 706 (i.e., eLNA) are incorporated into the streams for that antenna. The ePA 760 and eLNA 770 are housed within a front-end module (FEM) positioned directly adjacent to the far antenna 764, compensating for the longer signal path and potential losses.

The third architecture employs different strategies for managing coexistence challenges on each antenna path. On the far antenna side (also referred to as the ePA side), a filter 752 is placed before the ePA 760 (i.e., the input side of the ePA 760) in a transmission stream from the SoC 706 to the antenna 764. This configuration allows the ePA 760 to compensate for any insertion loss introduced by the filter 752, maintaining signal strength while providing necessary interference suppression. Conversely, in a reception stream from the antenna 764 to the SoC 706, the LNA 770 amplifies the received signal to improve the signal-to-noise ratio. Then, after the LNA 520 (i.e., the output side of the eLNA 520), the received signal passes through the filter 752 for attenuating any LTE/NR blockers that may have been amplified along with the desired Wi-Fi signal. Notably, the filter 752 may be a single filter. Alternatively, the filter 752 may be two or more cascaded filters.

On the near antenna side (also referred to as the iPA side), the system incorporates a bypass mechanism for the filter 702. During transmission, the signal from the iPA 710 can travel through a path 722 that bypasses the filter 702, avoiding the associated insertion loss. This bypass maintains signal strength in the iPA path, where no subsequent amplification stage is available to compensate for filter losses.

The third architecture can adapt to different coexistence scenarios. In a non-coexistence (non-COEX) case, where LTE/NR interference is not a concern, both antenna paths can be activated for transmission. The iPA side operates without filtering, maximizing power efficiency, while the ePA side utilizes filtering followed by amplification, maintaining both signal purity and strength.

In a coexistence scenario, the third architecture adapts by activating only the transmission stream on the ePA side, while no transmission occurs on the iPA side. This strategy leverages the ePA's ability to compensate for filter losses, ensuring robust Wi-Fi transmission without compromising LTE/NR operations.

The system further optimizes its performance based on antenna sharing configurations. In some UE 104 designs, the near antenna 714 may be shared with LTE/NR. In such cases, during single-stream operation (one-by-one scenario), the system preferentially activates the far antenna side. This choice capitalizes on the additional isolation (approximately 15 dB) provided by the physical separation between the far antenna 764 and the LTE/NR antenna, further reducing potential interference.

The reception path in the third architecture is designed to handle strong LTE/NR interference effectively. On the near antenna side, the filter 702 is actively engaged in the reception stream, positioned after the eLNA 720 and before the iLNA 724 within the SoC 706. This configuration is viable because any losses incurred after the LNA 720 can be compensated for by subsequent amplification stages within the receiver chain. Notably, the filter 702 may be a single filter. Alternatively, the filter 702 may be two or more cascaded filters.

When Wi-Fi acts as the receiver (victim) and LTE/NR as the transmitter (aggressor), strong LTE/NR signals may leak into the antenna 714, creating a significant blocker. While a diplexer 712 provides some attenuation of LTE/NR interference, it may not be sufficient for very strong signals. The external LNA 720 may amplify this blocker along with the desired Wi-Fi signal. Therefore, the filter 702 serves to eliminate or significantly reduce the LTE/NR blocker before it reaches the Wi-Fi receiver in the SoC 706, preventing potential disruption or damage.

The system 700 also accounts for the presence of Bluetooth (BT) technology, which operates in the same 2.4 GHz band as one of the Wi-Fi bands. To optimize resource usage, the system allows BT to share the same stream as the 2.4 GHz Wi-Fi when active. This sharing capability is incorporated into both receiver and transmitter components, enabling efficient coexistence of Wi-Fi and BT within the UE 104.

Further, the UE 104's processor can make real-time decisions on routing data to either the near antenna side or the far antenna side based on the current coexistence scheme, LTE/NR blocker levels, Wi-Fi received signal strength indication (RSSI), and target signal-to-noise ratio (SNR).

This architecture enables the UE 104 to maintain optimal Wi-Fi performance even in challenging radio environments where LTE/NR coexistence is a concern. By selectively utilizing the ePA path for transmission during coexistence scenarios, the system avoids the power loss issues associated with filtering in the iPA path. Simultaneously, it maintains receive diversity and performance by utilizing both antenna paths for reception.

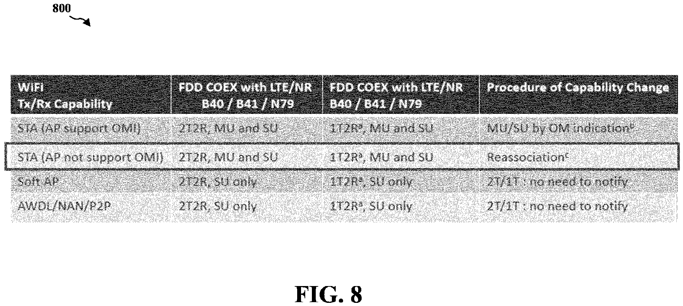

FIG. 8 illustrates a table 800 that outlines various communication configurations for Wi-Fi coexistence (COEX) with LTE/NR in a user equipment (UE) 104. The table 800 provides a comprehensive overview of the Wi-Fi transmit and receive (Tx/Rx) capabilities under different scenarios, particularly focusing on the coexistence challenges when Wi-Fi operates in Frequency Division Duplexing (FDD) mode alongside LTE/NR.

The first column of the table 800 specifies the Wi-Fi Tx/Rx capabilities for different types of stations (STAs). A STA, in Wi-Fi terminology, refers to a client device that connects to an access point (AP), such as the UE 104. The table 800 considers various scenarios, including STAs connected to APs that support or do not support Operating Mode Indication (OMI), as well as cases where the UE 104 functions as a soft AP (hotspot).

The second column describes the Wi-Fi configuration when FDD COEX with LTE/NR does not involve bands B40, B41, or N79. In this scenario, the Wi-Fi and LTE/NR frequency bands are non-adjacent and do not significantly interfere with each other. Under these conditions, the UE 104 can operate in a 2T2R mode, utilizing two transmission streams and two reception streams. This configuration supports both multi-user (MU) and single-user (SU) operations for STAs connected to APs, regardless of OMI support. For soft APs and other functionalities like NAN (Neighbor Awareness Networking) and P2P (Peer-to-Peer), the system supports 2T2R with SU operations only.

The third column addresses the more challenging scenario where Wi-Fi FDD coexists with LTE/NR on bands B40, B41, or N79. In these cases, the Wi-Fi and LTE/NR frequency bands are adjacent or overlapping, leading to potential interference. To mitigate this interference, the UE 104 adjusts its operation to a 1T2R mode. This adjustment involves disabling one transmission stream, typically the one using an antenna shared with or adjacent to LTE/NR, while maintaining two reception streams. The remaining active transmission stream utilizes the antenna farthest from the LTE/NR frequency band or employs an external Front-End Module (FEM) with an external Power Amplifier (PA). This configuration maintains MU and SU support for STAs connected to APs, while soft APs and other functionalities operate in SU mode only.

The fourth column of the table 800 outlines the procedures for changing capabilities in different scenarios. For STAs connected to APs that support OMI, the transition between different modes (e.g., from 2T2R to 1T2R) can be achieved through MU/SU by OM indication. This process, defined in IEEE Std 802.11ax-2021, allows a High Efficiency (HE) STA to change its operating mode settings using the OMI procedure, enabling seamless transitions without reassociation with the Wi-Fi router (AP) disrupting the user experience.

For STAs connected to APs that do not support OMI, the capability change requires reassociation. While this process may take more time and potentially cause a brief interruption in service, it enables changing association attributes of an established association while the STA remains associated with the same AP, as specified in IEEE Std 802.11-2020.

Soft APs and other functionalities like AWDL, NAN, and P2P can transition between 2T and 1T modes without the need for notification, providing a smoother user experience in these scenarios.

When Wi-Fi FDD coexists with LTE B40B41 and/or NR N79, the system selects a single Wi-Fi Tx stream using the eFEM path while maintaining two Wi-Fi Rx streams. This approach optimizes performance by utilizing the external FEM for transmission, which can better handle the filtering and amplification required in coexistence scenarios.

The OMI procedure, as defined in IEEE Std 802.11ax-2021, allows HE STAs to dynamically change their operating mode settings. This capability is useful in adapting to changing radio environments and coexistence scenarios without requiring full reassociation.

The reassociation process, while potentially disruptive, provides a method for changing association attributes even when OMI is not supported. This ensures compatibility with a wide range of APs, including older models that may not support the latest Wi-Fi standards.

The adaptive nature of this system allows the UE 104 to maintain optimal Wi-Fi performance across various scenarios. In non-coexistence cases, the UE 104 can fully utilize its MIMO capabilities with 2T2R operation. When coexistence challenges arise, particularly with bands B40, B41, or N79, the system intelligently reduces transmission streams while maintaining reception diversity. This approach minimizes interference with LTE/NR operations while preserving Wi-Fi performance as much as possible.

The ability to switch between these modes seamlessly, especially for newer APs supporting OMI, helps maintain a high-quality user experience. Users can continue their Wi-Fi activities without noticeable interruptions, even as the UE 104 adapts to changing radio environments. For older APs or in scenarios requiring reassociation, the system still provides a path to adapt, albeit with a potential brief service interruption.

The inclusion of soft AP, AWDL, NAN, and P2P scenarios in the table 800 accounts for various use cases beyond simple client connectivity, such as when the UE 104 functions as a hotspot or engages in direct device-to-device communication. The ability to maintain SU operations in these scenarios, even during coexistence challenges, allows users to utilize these features with minimal disruption.

For example, a user might start a Wi-Fi session at home with no LTE/NR interference, operating in full 2T2R mode. As they move to a location with stronger LTE/NR signals in adjacent bands, the UE 104 can dynamically adjust to 1T2R mode, maintaining connectivity while minimizing interference. This transition can occur without the user's awareness, preserving the quality of their experience.

Further, in a typical home or office setting, where the UE 104 connects to a standard AP, the system can utilize either OMI or reassociation to adapt its capabilities. In mobile scenarios, such as using the UE 104 as a hotspot in a car, the soft AP functionality allows for seamless transitions between 2T and 1T modes without notification, accommodating changing LTE/NR conditions as the vehicle moves through different coverage areas.

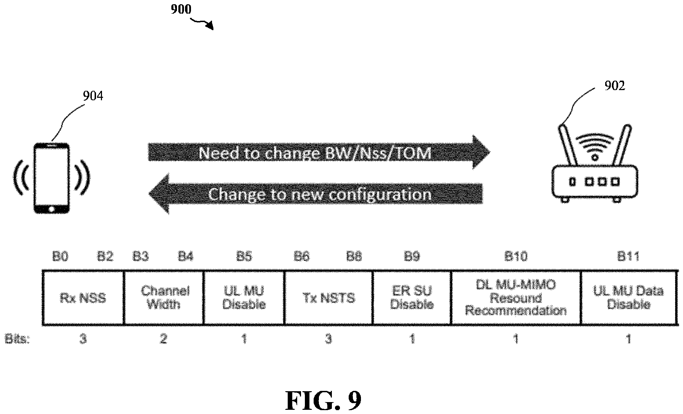

FIG. 9 is a diagram 900 illustrating an example interaction for changing the operating mode between a client device 904 and a Wi-Fi router (Access Point or AP) 902. The client device 904, which could be the UE 104 functioning as a High Efficiency Station (HE STA), can alter its operating mode configuration through the Operating Mode Indication (OMI) procedure. This procedure, defined in the IEEE 802.11ax-2021 standard (also known as Wi-Fi 6) and carried forward in Wi-Fi 7, provides a mechanism for STAs to dynamically adjust their capabilities without the need for reassociation.

The OMI procedure allows for several important adjustments in the STA's operating parameters. One key capability is the ability to change the Transmit Number of Spatial Streams (Tx Nsts) setting. For instance, the UE 104 can reduce its Tx Nsts from 2 to 1, effectively switching from a 2T2R (two transmit, two receive) configuration to a 1T2R configuration. This adjustment is useful in coexistence scenarios where the UE 104 needs to limit its Wi-Fi transmission to a single stream to minimize interference with LTE/NR operations.

Simultaneously, the OMI procedure allows the UE 104 to indicate to the AP 902 that it can utilize the Trigger Frame (TF) for uplink Multi-User (UL MU) transmissions. This capability enables the AP 902 to schedule and coordinate UL MU transmissions from multiple STAs, including the UE 104, even when the UE 104 has reduced its transmission capabilities.

Another significant feature of the OMI procedure is the option to disable the UL MU capability entirely. In scenarios where UL MU operation might be challenging due to interference or other factors, the UE 104 can inform the AP 902 that it will only use contention-based transmission. This fallback to traditional contention-based access can help maintain reliable communication in challenging radio environments.

Firstly, it allows the UE 104 to inform the AP 902 of its new transmission capabilities (e.g., switching from 2T2R to 1T2R) while maintaining a stable connection. This is particularly important in coexistence scenarios where the UE 104 needs to adapt quickly to the presence of LTE/NR signals in adjacent bands.

The non-reassociation nature of the OMI process enables dynamic configuration adjustments without causing service interruptions. For users of the UE 104, this means that transitions between different operating modes can occur seamlessly, without noticeable gaps in connectivity or performance. This transition is valuable for applications that require continuous connectivity, such as voice calls or video streaming.

The ability to make these adjustments without reassociation also enhances user satisfaction, especially for customers who demand the best performance from their devices under all conditions. In a coexistence scenario, for example, the UE 104 can quickly switch to a 1T2R mode when LTE/NR activity is detected in adjacent bands, and then revert to 2T2R mode when the interference subsides, all without any perceptible interruption to the user's Wi-Fi experience.

The OMI procedure is implemented through the transmission of an OM Control subfield within certain Wi-Fi frames. FIG. 9 includes a representation of the Control Information subfield format in an OM Control subfield, as defined in the IEEE 802.11ax-2021 standard. This subfield includes various fields that allow the STA to communicate its desired operating mode changes to the AP.

The Rx NSS field indicates the maximum number of spatial streams that the STA can receive. The Channel Width field specifies the operating channel width that the STA will use. The UL MU Disable field, when set, indicates that the STA is disabling its UL MU operations. The Tx NSTS field specifies the maximum number of space-time streams that the STA will use for transmissions. Additional fields provide information about Extended Range SU mode, Downlink MU-MIMO capabilities, and UL MU-MIMO capabilities.

By utilizing these fields, the UE 104 can precisely communicate its desired operating mode to the AP 902, allowing for fine-grained control over its Wi-Fi capabilities in response to various factors, including coexistence requirements with LTE/NR systems.

The OMI procedure may be backward compatible. When communicating with older APs that do not support OMI, the UE 104 can fall back to traditional reassociation methods to change its operating mode. This backward compatibility allows the UE 104 to maintain optimal performance across a wide range of Wi-Fi networks, from the latest Wi-Fi 6 and 7 deployments to older Wi-Fi 5 (802. 1 1ac) networks.

For example, in a scenario where the UE 104 detects increasing LTE/NR activity in an adjacent band, it can quickly use the OMI procedure to switch to a 1T2R mode, selecting the Wi-Fi transmit stream that uses an antenna farther from the LTE/NR antenna or one that utilizes an external power amplifier. This adjustment can be made within milliseconds, allowing the UE 104 to preemptively avoid potential interference issues.

Moreover, the OMI procedure allows for more nuanced adaptations beyond simple stream reduction. The UE 104 can adjust its channel width, potentially moving to a narrower channel that is less susceptible to adjacent band interference. It can also modify its UL MU behavior, either enabling it to participate in coordinated UL MU transmissions that might be more resistant to interference, or disabling it to fall back to more robust single-user transmissions when necessary.

As the UE 104 moves through different environments with varying levels of LTE/NR activity and Wi-Fi signal strength, it can continuously adjust its operating mode to maintain optimal performance. This dynamic behavior allows for transitions between different coexistence strategies, enabling the UE 104 to use the most appropriate configuration for the current radio environment.

More specifically, when transitioning from a 2T2R to a 1T2R configuration to avoid interference with LTE/NR bands B40, B41, or N79, the UE 104 may need to perform a re-association with the AP 902. This re-association allows the UE 104 to inform the AP 902 of its new capabilities without fully disconnecting and reconnecting to the network.

However, as discussed, the OMI procedure provides mechanisms for STAs to dynamically adjust their operating parameters without going through a full re-association. This OMI process, which would occur after the initial association, allows for more rapid and seamless adaptations to changing radio environments.

The ability to modify operating parameters without full re-association is valuable in scenarios where the UE 104 frequently needs to adjust its Wi-Fi configuration in response to varying LTE/NR activity. By avoiding the time-consuming process of re-association, the UE 104 can maintain a more stable and responsive Wi-Fi connection, enhancing the user experience in challenging radio environments.

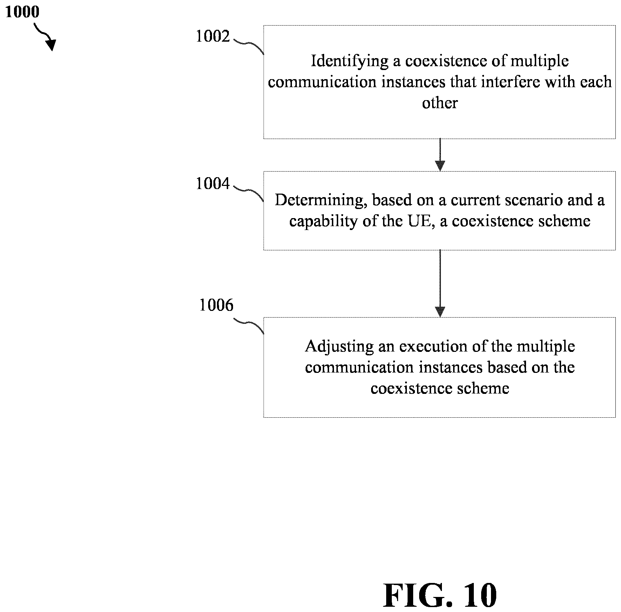

FIG. 10 is a flow chart illustrating an example process for addressing the coexistence challenge. This process involves interactions between multiple radio sources such as multiple base stations 102, the communication satellite 112, the wireless router 122 or the Wi-Fi access point (AP) 132, and a UE such as the UE 104.

At block 1002, the UE 104 may identifying a coexistence of multiple communication instances that interfere with each other.

Then, at block 1004, the UE 104 may determine, based on a current scenario and a capability of the UE 104, a coexistence scheme. Preferably, the coexistence scheme may be determined based on at least one of a Long Term Evolution (LTE), a New Radio (NR) or a Wireless Fidelity (Wi-Fi) blocker level, an LTE, NR or Wi-Fi received signal strength indication (RSSI), or a target signal-to-noise ratio (SNR).

Finally, at block 1006, the UE 104 may adjust an execution of the multiple communication instances based on the coexistence scheme. Preferably, adjusting the execution of the multiple communication instances may include: selecting a Wi-Fi transmission stream that uses an antenna farther from an LTE antenna or a Wi-Fi transmission stream that utilizes an external power amplifier.

Preferably, the coexistence scheme may include multiple coexistence schemes, and the execution of the multiple communication instances may be adjusted based on at least one of the multiple coexistence schemes.

Preferably, when the UE 104 is equipped with multiple antennas for one communication instance, an antenna of the multiple antennas, that is not shared with another communication instance that interferes with the one communication instance, may be selected to perform the execution of the one communication instance. The antenna that is not shared with the another communication instance, for example, may include an antenna that is farthest from the another communication instance.

Preferably, when the one communication instance includes a Wi-Fi instance, as an adjustment of the execution, a Wi-Fi transmission stream may be enabled on the antenna that is not shared with the another communication instance.

Preferably, the UE 104 may include an external power amplifier (ePA) outside a system on chip (SoC), an external low noise amplifier (eLNA) outside the SoC and an external filter outside the SoC; in a reception stream from an antenna to the SoC, the filter may be located between the eLNA and the SoC, while in a transmission stream from the SoC to the antenna, the filter may be located between the SoC and the ePA.

Preferably, the UE 104 may support a single input single output (SISO) configuration and a multiple input multiple output (MIMO) configuration, and when the UE is in the MIMO configuration, as another adjustment of the execution, the MIMO configuration for reception may be maintained while transitioning the MIMO configuration into the SISO configuration for transmission. Preferably, when transitioning the MIMO configuration into the SISO configuration for transmission, the UE 104 may select a transmission stream that uses at least one of an antenna that is not shared with another communication instance and an external power amplifier (ePA).

Preferably, when transitioning the MIMO configuration into the SISO configuration for transmission, the UE 104 may undergo no reassociation with an access point (AP).

Preferably, the process may further include: dynamically adjusting a coexistence threshold between multiple different coexistence schemes based on a particular parameter. The coexistence threshold, for example, may be programmed into a firmware of the UE 104. The particular parameter, for example, may include an LTE blocker level, a Wi-Fi received signal level, or a target signal signal-to-noise ratio (SNR).

Preferably, the multiple communication instances may include a Wi-Fi instance and a cellular radio instance. The cellular radio, for example, may include an LTE or an NR. The Wi-Fi instance, for example, may include at least one of 2.4 GHz Wi-Fi instances and 5 GHz/6 GHz Wi-Fi instances.

Preferably, the UE 104 may include an integrated power amplifier (iPA), an integrated low noise amplifier (iLNA), an external low noise amplifier (eLNA) and an external power amplifier (ePA).

Preferably, in an eLNA reception stream from an antenna to the iLNA, a filter may be located between the eLNA and the iLNA, while in an iPA transmission stream from the iPA to the antenna, the filter may be bypassed.

Preferably, in both an eLNA reception stream from an antenna to the eLNA and an ePA transmission stream from the ePA to the antenna, a filter may be located at the input of the ePA and at the output of the eLNA.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for".

## Claims

1. A method of wireless communication of a user equipment, in the following also referred to as UE, comprising:
identifying a coexistence of multiple communication instances that interfere with each other (1002);
determining, based on a current scenario and a capability of the UE, a coexistence scheme (1004); and
adjusting an execution of the multiple communication instances based on the coexistence scheme (1006).

2. The method of claim 1, wherein the coexistence scheme comprises multiple coexistence schemes, and the execution of the multiple communication instances is adjusted based on at least one of the multiple coexistence schemes.

3. The method of claim 1 or 2, wherein when the UE is equipped with multiple antennas for one communication instance, selecting an antenna of the multiple antennas that is not shared with another communication instance that interferes with the one communication instance to perform the execution of the one communication instance.

4. The method of claim 3, wherein the antenna that is not shared with the another communication instance comprises an antenna that is farthest from the another communication instance; and/or
wherein when the one communication instance comprises a Wireless Fidelity, in the following also referred to as Wi-Fi, instance, the adjusting comprises enabling a Wi-Fi transmission stream on the antenna that is not shared with the another communication instance.

5. The method of any one of claims 1 to 4, wherein the UE comprises an external power amplifier, in the following also referred to as ePA, outside a system on chip, in the following also referred to as SoC, an external low noise amplifier, in the following also referred to as eLNA, outside the SoC and an external filter outside the SoC; in a reception stream from an antenna to the SoC, the filter is located between the eLNA and the SoC, while in a transmission stream from the SoC to the antenna, the filter is located between the SoC and the ePA.

6. The method of any one of claims 1 to 5, wherein the UE supports a single input single output, in the following also referred to as SISO, configuration and a multiple input multiple output, in the following also referred to as MIMO, configuration, and when the UE is in the MIMO configuration, the adjusting comprises maintaining the MIMO configuration for reception while transitioning the MIMO configuration into the SISO configuration for transmission.

7. The method of claim 6, wherein when transitioning the MIMO configuration into the SISO configuration for transmission, the UE undergoes no reassociation with an access point, in the following also referred to as AP; and/or
wherein when transitioning the MIMO configuration into the SISO configuration for transmission, the UE selects a transmission stream that uses at least one of
an antenna that is not shared with another communication instance; and
an external power amplifier, in the following also referred to as ePA.

8. The method of any one of claims 1 to 7, further comprising:
dynamically adjusting a coexistence threshold between multiple different coexistence schemes based on a particular parameter.

9. The method of claim 8, wherein the coexistence threshold is programmed into a firmware of the UE; and/or
wherein the particular parameter comprises a Long Term Evolution, in the following also referred to as LTE, blocker level, a Wi-Fi received signal level, or a target signal signal-to-noise ratio, in the following also referred to as SNR.

10. The method of any one of claims 1 to 9, wherein the multiple communication instances comprise a Wi-Fi instance and a cellular radio instance, wherein preferably the cellular radio comprises an LTE or a New Radio, in the following also referred to as NR, and/or the Wi-Fi instance comprises at least one of 2.4 GHz Wi-Fi instances and 5 GHz/6 GHz Wi-Fi instances; and/or
wherein the coexistence scheme is determined based on at least one of: an LTE, a NR or a Wi-Fi blocker level, an LTE, NR or Wi-Fi received signal strength indication, in the following also referred to as RSSI, or a target SNR.

11. The method of any one of claims 1 to 10, wherein the UE comprises an integrated power amplifier, in the following also referred to as iPA, an integrated low noise amplifier, in the following also referred to as iLNA, an external low noise amplifier, in the following also referred to as eLNA, and an external power amplifier, in the following also referred to as ePA.

12. The method of claim 11, wherein in an eLNA reception stream from an antenna to the iLNA, a filter is located between the eLNA and the iLNA, while in an iPA transmission stream from the iPA to the antenna, the filter is bypassed; and/or
wherein in both an eLNA reception stream from an antenna to the eLNA and an ePA transmission stream from the ePA to the antenna, a filter is located at the input of the ePA and at the output of the eLNA.

13. The method of any one of claims 1 to 12, wherein adjusting the execution of the multiple communication instances comprises:
selecting a Wi-Fi transmission stream that uses an antenna farther from an LTE antenna or a Wi-Fi transmission stream that utilizes an external power amplifier.

14. An apparatus for wireless communication, the apparatus being a user equipment, in the following also referred to as UE, comprising:
a memory (206); and
at least one processor (202) coupled to the memory (206) and configured to perform the method steps as defined in any one of claims 1 to 13.

15. A computer-readable medium storing computer executable code for wireless communication of a user equipment, in the following also referred to as UE, comprising code to perform the method steps as defined in any one of claims 1 to 13.
